# EUROPEAN PATENT SPECIFICATION

(11) **EP 1 596 570 B1**
(45) Date of publication and mention of the grant of the patent: **18.05.2016**
(21) Application number: 05103602.8
(22) Date of filing: 29.04.2005
(51) Int. Cl.: H04N 1/387

(54) **A document scanner with editing function**
Ein Dokumentenscanner mit einer Editierfunktion
Un lecteur de documents avec une fonction de montage

(30) Priority: 12.05.2004 KR 2004033374
(43) Date of publication of application: 16.11.2005
(73) Proprietor: Samsung Electronics Co., Ltd., Gyeonggi-do 16677 (KR)
(72) Inventor: Kim, Young-min, Suwon-si, Gyeonggi-do (KR); Kang, Kyoung-mook, Yeongtong-gu, Suwon-si, Gyeonggi-do (KR); Park, Sang-cheol, Yeogtong-gu, Suwon-siGyeonggi-do (KR)
(74) Representative: Walaski, Jan Filip

(56) References cited:
- EP-A- 0 991 263
- EP-A- 1 089 161
- US-A- 5 157 507
- US-B1- 6 323 876

## Description

The present invention relates to a document scanner comprising scanning means for scanning a document, user input means and control means configured to edit an electronic document, produced by the scanning means, according operation of the user input means.

Typically, a multi purpose device having an editing function reads document data representative of a page that has been scanned, and prints the data or transfers the data to a communication device such as a modem. Accordingly, when an original document is scanned and printed or transferred, in general, the image of the original document is scanned without alteration and then printed or transferred.

However, a user may want to edit the document before printing or transferring, for example, by underlining a specific area for emphasis, creating a box to highlight an area or applying a mosaic or black-out to an area securing the contents of the document.

In older to do this, either the user edits the document before scanning, or first scans it, edits the scanned document, and then prints or transfers the edited document.

In a known scanning method, if a page of a document to be scanned is edited before scanning, printing or transferring, the document may become damaged due to direct editing by the user. Alternatively, if the document data is edited after scanning, an additional editing operation is required.

EP-A-0 991 263 discloses a method performing an optimized final scan of a selected region from a preview scan of a document.

The present invention provides a document scanning method and apparatus having an editing function to allowing an area of the document to be placed in a desired form, and a multi functional peripheral using the method.

According to an aspect of the present invention, there is provided a document scanning method according to claim 1 and a document scanning apparatus according to claim 13.

The present invention relates to a document scanner comprising scanning means for scanning a document, user input means and control means configured to edit an electronic document, produced by the scanning means, according operation of the user input means.

A document scanner according to the present invention is characterised in that the control means is responsive to operation of the user input means to establish an editing area of a electronic document before the electronic document is produced by the scanning means; and limited in the performance of said editing to said editing area established for the electronic document being edited.

Additional optional and preferred features are set forth in claims 1 and 2 appended hereto.

An embodiment of the present invention will now be described, by way of example only, and with reference to the accompanying drawings, in which:
Figure 1 is a block diagram showing a document scanning apparatus having an editing function according to an embodiment of the present invention;
Figure 2 is a detailed block diagram illustrating an image area extracting unit of the document scanning apparatus of Figure 1;
Figure 3 is a detailed block diagram illustrating a text area extracting unit of the document scanning apparatus of Figure 1;
Figure 4A is a view illustrating a page to be scanned using an editing function;
Figure 4B is a view illustrating the result when the page of Figure 4A is edited using the document scanning apparatus of Figure 1;
Figure 4C is a view illustrating a table of coordinates corresponding to each editing area in Figure 4B;
Figure 5 is a view illustrating a method of inputting coordinates of an editing area in an editing function;
Figure 6 is a view illustrating a method of compensating operation by putting an outline on an editing area of a page;
Figure 7 is a view illustrating a method of classifying a graphic area and a text area of a page according to the present invention;
Figure 8 is a structural block diagram illustrating a multi functional peripheral to print a document using a document scanning apparatus having an editing function according to the present invention;
Figure 9 is a structural block diagram illustrating a multi functional peripheral to send document data using a document scanning apparatus according to the present invention;
Figure 10 is a flowchart illustrating a document scanning method having an editing function according to the present invention;
Figure 11 is a detailed flowchart illustrating a classifying operation of the method of extracting the editing area data of Figure 10; and
Figure 12 is a detailed flowchart illustrating a classifying operation of the method of extracting the editing area data of Figure 10.

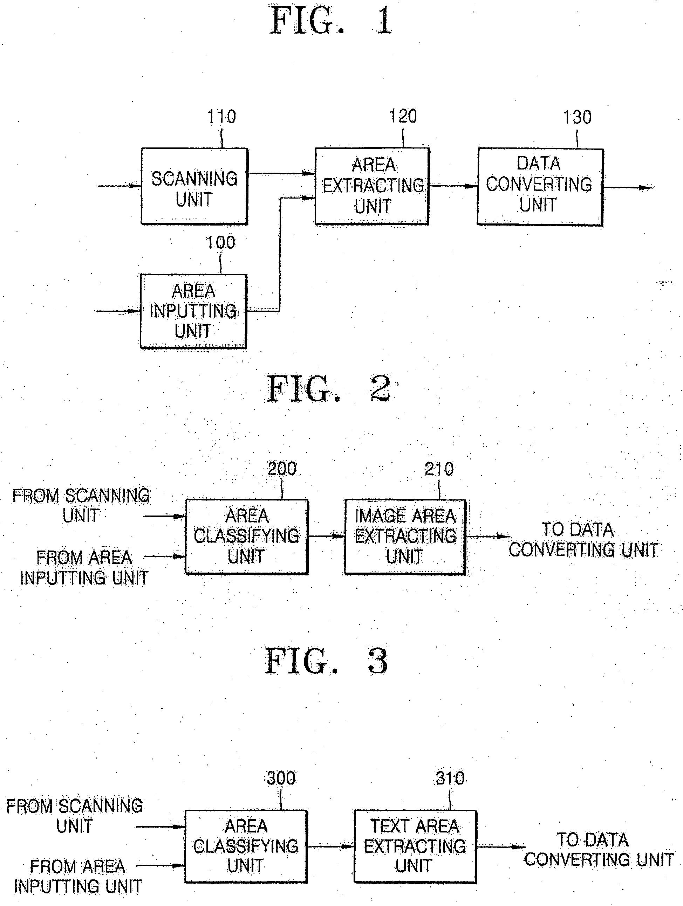

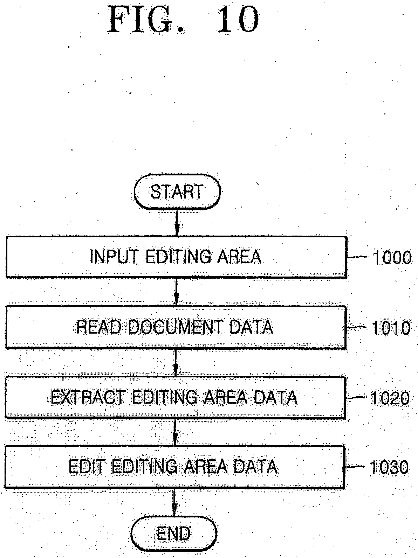

The scanning apparatus illustrated in Figure 1 will be described together with the scanning method illustrated in Figure 10. Referring to Figure 1, the document scanning apparatus includes an area inputting unit 100, a scanning unit 110, an area extracting unit 120 and a data converting unit 130.

A user inputs positional information regarding an area to be edited into the area inputting unit 100. The area inputting unit 100 outputs information about this area of the page (operation 1000). In operation 1000, the user can delineate the area to be edited by inputting coordinates corresponding to this area. Also, the user may selectively input a graphic area or a text area as the editing area.

The scanning unit 110 scans the page to generate data representative of the page (operation 1010). The area extracting unit 120 extracts data representative of the area to be edited from the data representative of the whole scanned page received from the scanning unit 110. The relevant data relating to the area to be edited is extracted according to the information about the area to be edited received from the area inputting unit 100 (operation 1020). The data converting unit 120 receives the extracted data (representing the area to be edited), and outputs data representative of the area after editing has taken place. The editing is in accordance with the editing function designated by the user (operation 1030).

In the operation 1030, after editing the data of the extracted data in operation 1020, the edited data is merged back into the scanned document data of the page. In other words, the scanned document data of the page will include both the editing area and a non-editing area, where the data which represented the original area to be edited can be replaced by edited data. Accordingly, the scanned document data of the page will include both the data representing the edited area and the data representative of the non-edited area.

The area to be edited may be edited by a method of, for example, underlining the area with a line of a certain thickness and colour or putting an outline of a certain thickness and colour around the area. In addition, the area may be edited so as to cover it with a certain colour or a mosaic.

The scanning apparatus illustrated in Figure 1 may operate as a multi functional device including an outputting unit to output the edited area received from the data converting unit 130. The outputting unit may be a printing unit to print the edited area or a transferring unit to send data representative of the document to an external device. The multifunctional device may print and/or output either the edited area or the document including the edited area.

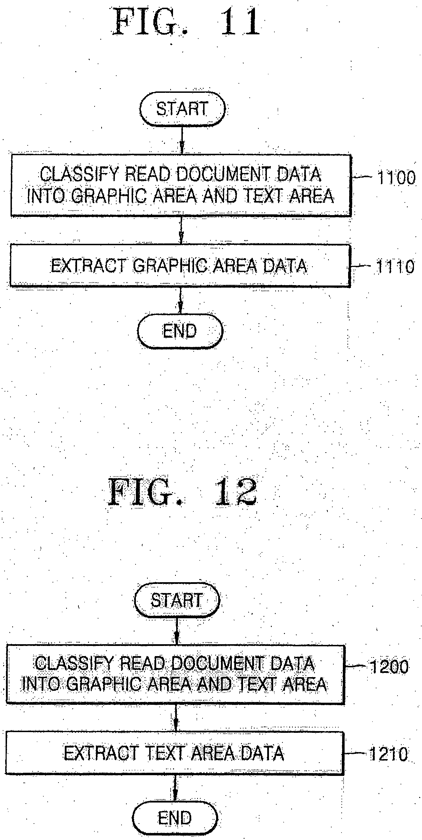

The area extracting unit 120 illustrated in Figure 2 will be described in association with the extracting method illustrated in Figure 11. Referring to Figure 2, the area extracting unit 120 includes an area classifying unit 200 and a graphic area extracting unit 210.

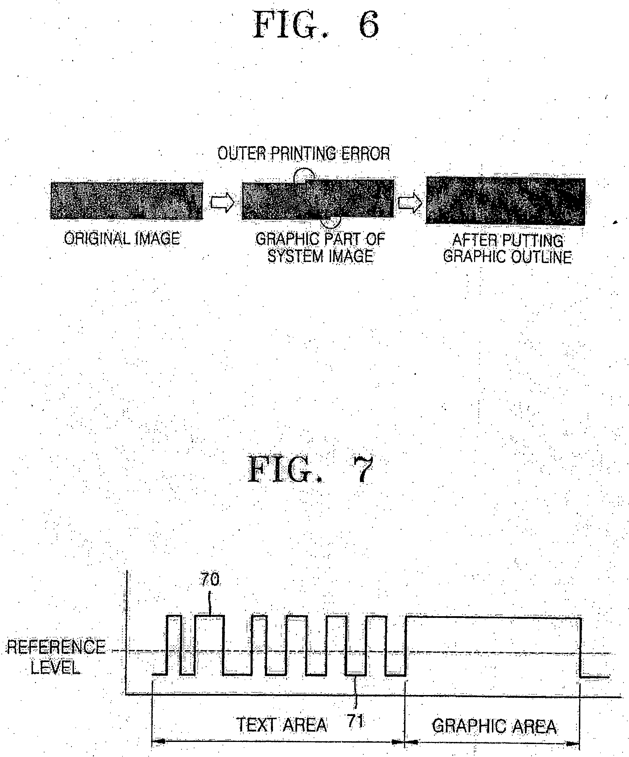

The area classifying unit 200 classifies the data received from the scanning unit 110 into either graphic area data and text area data according to the data relating to the area to be edited received from the area inputting unit (operation 1100). It is possible to recognize and classify the area automatically using features of the data of each area. Figure 7 is a view illustrating the method of classifying image data and text data on a page. Referring to Figure 7, the data read by the scanning unit 110 is processed line by line. In the data, a part 70 having a value higher than a reference level is where an image (or ink) is present, and data of this part is printed or transferred, and a part 71 having a value lower than the reference level is where no image exists (no ink printed on the sheet). Further, data representative of a text area varies at a higher frequency, and data of a graphic area is not changed as frequently. The area classifying units 200 and 300 can classify the read data into text areas and graphic areas using the frequency of the data.

The graphic area extracting unit 210 receives information about the graphic area data from the area classifying unit and extracts the graphic area data from the read document data (operation 1110).

The text area extracting unit 120 illustrated in Figure 3 will be described together with the extracting method illustrated in Figure 12. Referring to Figure 3, the area extracting unit 120 includes an area classifying unit 300 and a text area extracting unit 310.

The area classifying unit 300 classifies the read document data received from the scanning unit 110 into graphic area data and text area data according to the selected area information received from the area inputting unit 100 (operation 1200). As illustrated in Figure 7, it is possible to automatically recognize the classified area using the features of the data of each area. The text area extracting unit 310 receives information about text area data from the area classifying unit, and extracts the text area data from the read data (operation 1210).

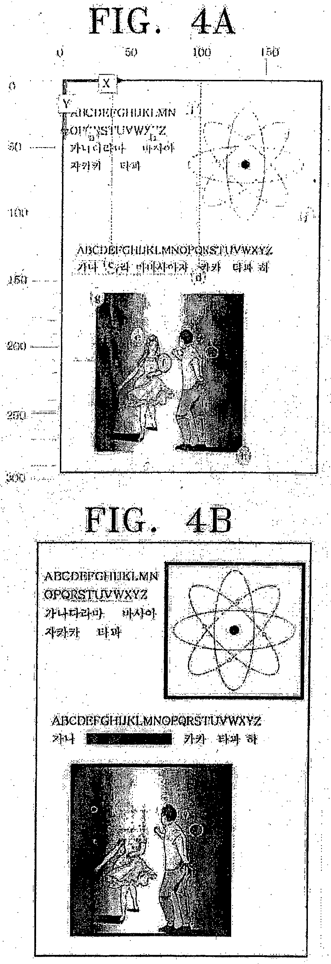

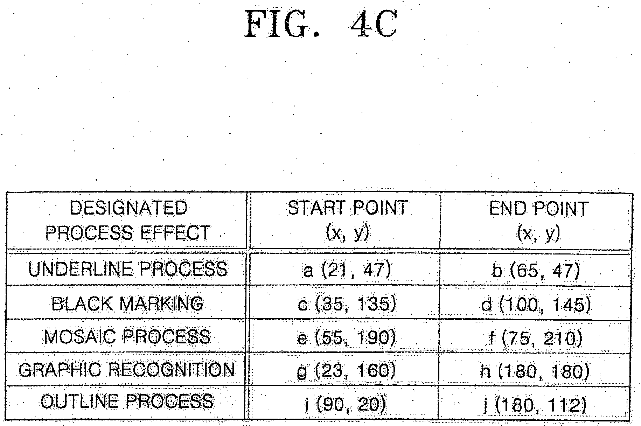

Figure 4A is a view illustrating a page having document data to be edited. Figure 4B is a view illustrating a result when the document data of Figure 4A is edited using the document scanning apparatus of Figure 1. Figure 4C is a view illustrating a table of coordinates corresponding to each editing area in Figure 4B. The coordinates shown in Figure 4C are specified by a user's input through the area inputting unit 100.

To underline a certain area of the page, the user inputs a start point (a(21,47)) and an endpoint (b(65,47)) of the specified area, so that the edited document data between the point 'a' and 'b' is underlined as shown in Figure 4A.

To black out (or shade) a certain area of the page, the user inputs a start point (c(35,135)) and endpoint (d(100,145)) of the specified area, so that the edited document data within the rectangular area having corner points 'c' and 'd' is blacked out (or shaded) as shown in Figures 4A and 4B.

To apply a mosaic to the specified area of the page, the user inputs the start point (e(55,190)) and the endpoint (f(75,210)) of the area, so that a mosaic is applied within the rectangular area having corner points 'e' and 'f' as shown in Figure 4B.

To put an outline on a certain area of the page, the user inputs the start point (i (90,20)) and the endpoint (j (180,112)) of the area, so that a rectangular area having corner points 'i' and `j' is outlined (surrounded) with a line of a certain thickness as shown in Figure 4B.

To put an outline on a graphic area of the page, a text area and a graphic area are distinguished and the start point (g (23,160)) and the endpoint (h (180,180)) of the graphic area are recognized, so that a rectangular area having corner points 'g' and 'h' is outlined with a line of a certain thickness as shown in Figure 4B.

According to the embodiment of the present general inventive concept, an outer printing error in the editing area in a page can be compensated for by putting an outline around the area to be edited. Here, the outer printing error may be caused by misaligned paper or disturbance during scanning. Figure 6 is a view illustrating a method of compensating for an outer printing error by putting an outline around the area to be edited. Referring to Figure 6, the outer printing error may occur in image data read from the original image. However, the outer printing error can be compensated for by putting an outline around the outer printing error so that the area to be edited can be recognized clearly.

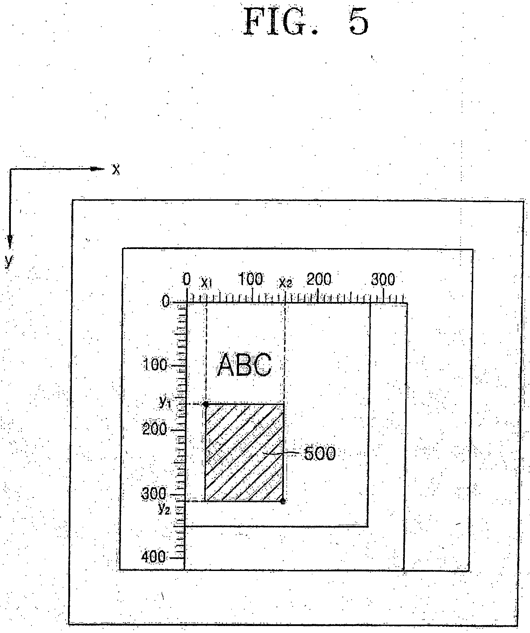

By inputting the coordinates of the area to be edited, a start point and an endpoint are input. Figure 5 is a view illustrating a method of defining the editing area by inputting the coordinates of the editing area. In this method, a page to be scanned is placed face-up, and the editing area is defined by inputting the coordinates of the area 500 to be edited, namely, a start point (x1, y1) and an endpoint (x2, y2). After inputting the coordinates, the page is turned over and scanned, and then the page is scanned having the area defined according to the coordinates.

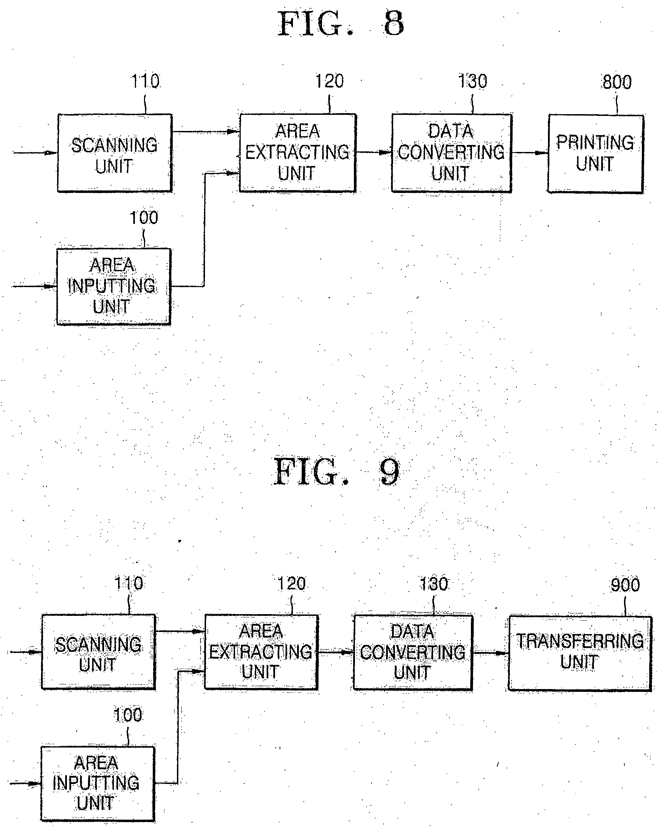

Referring to Figure 8, the multi functional device includes an area inputting unit 100, a scanning unit 110, an area extracting unit 120, a data converting unit 130, and a printing unit 800.

Since the area inputting unit 100, the scanning unit 110, the area extracting unit 120 and the data converting unit 130 are identical to those in Figure 1, the descriptions thereof will be omitted. The printing unit 800 receives the edited document data from the data converting unit 130 and prints the edited document data.

Referring to Figure 9, the multi functional peripheral includes an area inputting unit 100, a scanning unit 110, an area extracting unit 120, a data converting unit 130 and transferring unit 900.

Since the area inputting unit 100, the scanning unit 110, the area extracting unit 120 and the data converting unit 130 are identical to those in Figure 1, the descriptions thereof will be omitted. The transferring unit 900 receives the edited document data from the data converting unit 130 and sends the edited document data to an external device.

The general inventive concept can also be embodied as a computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the internet).

As described above, a document scanning apparatus and method having an editing function according to the present invention enables a user to easily edit and scan a document by defining an area to be edited in a page to be scanned and editing the desired area, without damaging the document or performing an additional editing operation.

## Claims

1. A document scanning method comprising:
inputting an editing area of a page to be scanned before the page is scanned;
obtaining document data of the page when the page is scanned, the document data comprising editing area data corresponding to the editing area and non-editing area data corresponding to an area of the page other than the editing area;
extracting the editing area data from the document data using the information of the editing area received from the area inputting unit by classifying the data corresponding to the editing area of the document data into a graphic area and a text area, and by extracting graphic area data of the graphic area from the document data as the extracted data,
or extracting text area data of the text area from the document data as the extracted data;
editing the extracted data; and
combining the edited data with the non-editing area data to produce an edited page,
wherein the inputting of the editing area comprises inputting coordinates, inputting a graphic area, or inputting a text area as the editing area.

2. The method of claim 1, wherein the editing of the extracted data comprises editing the extracted data to underline the editing area with a line of a predetermined thickness and colour.

3. The method of claim 1, wherein the editing of the extracted data comprises editing the extracted data to put an outline of a predetermined thickness and colour around the editing area.

4. The method of claim 1, wherein the editing of the extracted data comprises editing the extracted data to fill the editing area with a predetermined colour.

5. The method of claim 1, wherein the editing of the extracted data comprises editing the extracted data to apply a mosaic of a predetermined colour to the editing area.

6. The method of claim 1, wherein the editing of the extracted data comprises:
determining a characteristic of the editing area; and
editing the extracted data according to the editing characteristic of the editing area.

7. The method of claim 1, wherein the editing of the extracted data comprises:
determining a frequency of the extracted data; and
editing the extracted area according to an editing value corresponding to the frequency.

8. A document scanning apparatus comprising:
an area inputting unit which receives information of an editing area of a page to be scanned before the page is scanned;
a reading unit which reads document data from the page when the page is scanned, the document data comprising editing area data corresponding to the editing area and non-editing area data corresponding to an area of the page other than the editing area;
an area extracting unit which extracts the editing area data from the read document data using the information of the editing area received from the area inputting unit, wherein the area extracting unit comprises:
an area classifying unit which classifies the read document data into a graphic area and a text area; and
a graphic area extracting unit which outputs graphic area data by extracting the graphic area data from the read document data as the extracted data or a text area extracting unit which outputs text area data by extracting the text area data from the scanned document data as the extracted data; and
a data converting unit which edits the extracted data and combines the edited data with the non-editing data to produce the edited page,
wherein the an area inputting unit receives coordinates, a graphic area or a text area as the editing area from a user.

9. The apparatus of claim 8, wherein the reading unit comprises a scanning unit to scan the page so that the document data is read from the scanned page.

10. The apparatus of claim 8, wherein the area inputting unit outputs the coordinates as the information of the editing area.

11. The apparatus of claim 8, wherein the area inputting unit outputs at least one of the graphic area and the text area as the information of the editing area.

12. The apparatus of claim 8, wherein the data converting unit edits the extracted data to underline the editing area of the page with a line of a predetermined thickness and colour.

13. The apparatus of claim 8, wherein the data converting unit edits the extracted data to put an outline of a predetermined thickness and colour around the editing area of the page.

14. The apparatus of claim 8, wherein the data converting unit edits the extracted data to fill the editing area of the page with a predetermined colour.

15. The apparatus of claim 8, wherein the data converting unit edits the extracted data to apply a mosaic of a predetermined colour to the editing area of the page.

16. The apparatus of claim 8, wherein the data converting unit determines a characteristic of the editing area and edits the extracted data according to the editing characteristic of the editing area.

17. The apparatus of claim 8, wherein the data converting unit determines a frequency of the extracted data, and edits the extracted area according to an editing value corresponding to the frequency.

18. A multi functional peripheral having an editing function, the multi functional peripheral comprising:
a document scanning apparatus according to any one of claims 8 to 17; and an outputting unit which outputs the edited document data.

19. The multi functional peripheral of claim 18, wherein the outputting unit comprises a printing unit which prints the edited document data.

20. The multi functional peripheral of claim 18, wherein the outputting unit comprises a transferring unit which transfers the edited document data to an external device.

21. A computer readable recording medium storing a computer readable code to perform a document scanning method according to any one of claims 1 to 7.

## Patentansprüche

1. Verfahren zum Scannen von Dokumenten, das Folgendes aufweist:
Eingeben eines Bearbeitungsbereichs einer zu scannenden Seite, bevor die Seite gescannt wird;
Erhalten von Dokumentendaten der Seite, wenn die Seite gescannt wird, wobei die Dokumentendaten Bearbeitungsbereichsdaten, die dem Bearbeitungsbereich entsprechen, und Nichtbearbeitungsbereichsdaten, die einem anderen Bereich der Seite als dem Bearbeitungsbereich entsprechen, aufweisen;
Entnehmen der Bearbeitungsbereichsdaten aus den Dokumentendaten unter Verwendung der von der Bereichseingabeeinheit empfangenen Informationen über den Bearbeitungsbereich durch Einstufen der Daten, die dem Bearbeitungsbereich der Dokumentendaten entsprechen, in einen Grafikbereich und einen Textbereich, und durch Entnehmen von Grafikbereichsdaten des Grafikbereichs aus den Dokumentendaten als die entnommenen Daten
oder Entnehmen von Textbereichsdaten des Textbereichs aus den Dokumentendaten als die entnommenen Daten;
Bearbeiten der entnommenen Daten und
Kombinieren der bearbeiteten Daten mit den Nichtbearbeitungsbereichsdaten, um eine bearbeitete Seite zu produzieren,
wobei das Eingeben des Bearbeitungsbereichs das Eingeben von Koordinaten, Eingeben eines Grafikbereichs oder Eingeben eines Textbereichs als den Bearbeitungsbereich aufweist.

2. Verfahren nach Anspruch 1, wobei das Bearbeiten der entnommenen Daten das Bearbeiten der entnommenen Daten zum Unterstreichen des Bearbeitungsbereichs mit einer Linie vorbestimmter Dicke und Farbe aufweist.

3. Verfahren nach Anspruch 1, wobei das Bearbeiten der entnommenen Daten das Bearbeiten der entnommenen Daten zum Umgeben des Bearbeitungsbereichs mit einer Umrisslinie einer vorbestimmten Dicke und Farbe aufweist.

4. Verfahren nach Anspruch 1, wobei das Bearbeiten der entnommenen Daten das Bearbeiten der entnommenen Daten zum Füllen des Bearbeitungsbereichs mit einer vorbestimmten Farbe aufweist.

5. Verfahren nach Anspruch 1, wobei das Bearbeiten der entnommenen Daten das Bearbeiten der entnommenen Daten zum Anwenden eines Mosaiks einer vorbestimmten Farbe auf den Bearbeitungsbereich aufweist.

6. Verfahren nach Anspruch 1, wobei das Bearbeiten der entnommenen Daten Folgendes aufweist:
Bestimmen einer Eigenschaft des Bearbeitungsbereichs und
Bearbeiten der entnommenen Daten gemäß der Bearbeitungseigenschaft des Bearbeitungsbereichs.

7. Verfahren nach Anspruch 1, wobei das Bearbeiten der entnommenen Daten Folgendes aufweist:
Bestimmen einer Frequenz der entnommenen Daten und
Bearbeiten des entnommenen Bereichs gemäß einem der Frequenz entsprechenden Bearbeitungswert.

8. Vorrichtung zum Scannen von Dokumenten, die Folgendes aufweist:
eine Bereichseingabeeinheit, die Informationen über einen Bearbeitungsbereich einer zu scannenden Seite empfängt, bevor die Seite gescannt wird;
eine Leseeinheit, die Dokumentendaten von der Seite abliest, wenn die Seite gescannt wird, wobei die Dokumentendaten Bearbeitungsbereichsdaten, die dem Bearbeitungsbereich entsprechen, und Nichtbearbeitungsbereichsdaten, die einem anderen Bereich der Seite als dem Bearbeitungsbereich entsprechen, aufweisen;
eine Bereichsentnahmeeinheit, die die Bearbeitungsbereichsdaten aus den gelesenen Dokumentendaten unter Verwendung der von der Bereichseingabeeinheit empfangenen Informationen über den Bearbeitungsbereich entnimmt, wobei die Bereichsentnahmeeinheit Folgendes aufweist:
eine Bereichseinstufungseinheit, die die gelesenen Dokumentendaten in einen Grafikbereich und einen Textbereich einstuft; und
eine Grafikbereichsentnahmeeinheit, die Grafikbereichsdaten durch Entnehmen der Grafikbereichsdaten aus den gelesenen Dokumentendaten als die entnommenen Daten ausgibt, oder eine Textbereichentnahmeeinheit, die Textbereichsdaten durch Entnehmen der Textbereichsdaten aus den gescannten Dokumentendaten als die entnommenen Daten ausgibt; und
eine Datenumsetzungseinheit, die die entnommenen Daten bearbeitet und die bearbeiteten Daten mit den Nichtbearbeitungsdaten kombiniert, um die bearbeitete Seite zu erzeugen,
wobei die Bereichseingabeeinheit Koordinaten, einen Grafikbereich oder einen Textbereich als den Bearbeitungsbereich von einem Benutzer empfängt.

9. Vorrichtung nach Anspruch 8, wobei die Leseeinheit eine Scanneinheit zum Scannen der Seite aufweist, so dass die Dokumentendaten von der gescannten Seite abgelesen werden.

10. Vorrichtung nach Anspruch 8, wobei die Bereichseingabeeinheit die Koordinaten als die Informationen über den Bearbeitungsbereich ausgibt.

11. Vorrichtung nach Anspruch 8, wobei die Bereichseingabeeinheit den Grafikbereich und/oder den Textbereich als die Informationen über den Bearbeitungsbereich ausgibt.

12. Vorrichtung nach Anspruch 8, wobei die Datenumsetzungseinheit die entnommenen Daten zum Unterstreichen des Bearbeitungsbereichs der Seite mit einer Linie vorbestimmter Dicke und Farbe bearbeitet.

13. Vorrichtung nach Anspruch 8, wobei die Datenumsetzungseinheit die entnommenen Daten zum Umgeben des Bearbeitungsbereichs der Seite mit einer Umrisslinie einer vorbestimmten Dicke und Farbe bearbeitet.

14. Vorrichtung nach Anspruch 8, wobei die Datenumsetzungseinheit die entnommenen Daten zum Füllen des Bearbeitungsbereichs der Seite mit einer vorbestimmten Farbe bearbeitet.

15. Vorrichtung nach Anspruch 8, wobei die Datenumsetzungseinheit die entnommenen Daten zum Anwenden eines Mosaiks einer vorbestimmten Farbe auf den Bearbeitungsbereich der Seite bearbeitet.

16. Vorrichtung nach Anspruch 8, wobei die Datenumsetzungseinheit eine Eigenschaft des Bearbeitungsbereichs bestimmt und die entnommenen Daten gemäß der Bearbeitungseigenschaft des Bearbeitungsbereichs bearbeitet.

17. Vorrichtung nach Anspruch 8, wobei die Datenumsetzungseinheit eine Frequenz der entnommenen Daten bestimmt und den entnommenen Bereich gemäß einem der Frequenz entsprechenden Bearbeitungswert bearbeitet.

18. Multifunktionales Peripheriegerät mit einer Bearbeitungsfunktion, wobei das multifunktionale Peripheriegerät Folgendes aufweist:
eine Vorrichtung zum Scannen von Dokumenten nach einem der Ansprüche 8 bis 17 und eine Ausgabeeinheit, die die bearbeiteten Dokumentendaten ausgibt.

19. Multifunktionales Peripheriegerät nach Anspruch 18, wobei die Ausgabeeinheit eine Druckeinheit aufweist, die die bearbeiteten Dokumentendaten druckt.

20. Multifunktionales Peripheriegerät nach Anspruch 18, wobei die Ausgabeeinheit eine Übertragungseinheit aufweist, welche die bearbeiteten Dokumentendaten an eine externe Einrichtung überträgt.

21. Computerlesbares Aufzeichnungsmedium, das einen computerlesbaren Code zum Durchführen eines Verfahrens zum Scannen von Dokumenten nach einem der Ansprüche 1 bis 7 speichert.

## Revendications

1. Procédé de numérisation de document par balayage comportant :
l'étape consistant à entrer une zone d'édition d'une page devant être numérisée par balayage avant que la page ne soit numérisée par balayage ;
l'étape consistant à obtenir des données du document de la page quand la page est numérisée par balayage, les données du document comportant des données de zone d'édition correspondant à la zone d'édition et des données de zone de non-édition correspondant à une zone de la page autre que la zone d'édition ;
l'étape consistant à extraire les données de zone d'édition en provenance des données du document en utilisant les informations de la zone d'édition reçues en provenance de l'unité d'entrée de zone par la classification des données correspondant à la zone d'édition des données du document en une zone graphique et en une zone de texte, et par l'extraction de données de zone graphique de la zone graphique en provenance des données du document comme étant les données extraites,
ou l'étape consistant à extraire des données de zone de texte de la zone de texte en provenance des données du document comme étant les données extraites ;
l'étape consistant à éditer les données extraites ; et
l'étape consistant à combiner les données éditées et les données de zone de non-édition afin de produire une page éditée,
dans lequel l'étape consistant à entrer la zone d'édition comporte l'étape consistant à entrer des coordonnées, l'étape consistant à entrer une zone graphique, ou l'étape consistant à entrer une zone de texte comme étant la zone d'édition.

2. Procédé selon la revendication 1, dans lequel l'étape consistant à éditer les données extraites comporte l'étape consistant à éditer les données extraites pour souligner la zone d'édition au moyen d'une ligne d'une épaisseur et d'une couleur prédéterminées.

3. Procédé selon la revendication 1, dans lequel l'étape consistant à éditer les données extraites comporte l'étape consistant à éditer les données extraites pour placer un contour d'une épaisseur et d'une couleur prédéterminées autour de la zone d'édition.

4. Procédé selon la revendication 1, dans lequel l'étape consistant à éditer les données extraites comporte l'étape consistant à éditer les données extraites pour remplir la zone d'édition au moyen d'une couleur prédéterminée.

5. Procédé selon la revendication 1, dans lequel l'étape consistant à éditer les données extraites comporte l'étape consistant à éditer les données extraites pour appliquer une mosaïque d'une couleur prédéterminée sur la zone d'édition.

6. Procédé selon la revendication 1, dans lequel l'étape consistant à éditer les données extraites comporte :
l'étape consistant à déterminer une caractéristique de la zone d'édition ; et
l'étape consistant à éditer les données extraites en fonction de la caractéristique d'édition de la zone d'édition.

7. Procédé selon la revendication 1, dans lequel l'étape consistant à éditer les données extraites comporte :
l'étape consistant à déterminer une fréquence des données extraites ; et
l'étape consistant à éditer la zone extraite en fonction d'une valeur d'édition correspondant à la fréquence.

8. Appareil de numérisation de document par balayage comportant :
une unité d'entrée de zone qui reçoit des informations d'une zone d'édition d'une page devant être numérisée par balayage avant que la page ne soit numérisée par balayage ;
une unité de lecture qui lit des données du document de la page quand la page est numérisée par balayage, les données du document comportant des données de zone d'édition correspondant à la zone d'édition et des données de zone de non-édition correspondant à une zone de la page autre que la zone d'édition ;
une unité d'extraction de zone qui extrait les données de zone d'édition en provenance des données lues du document en utilisant les informations de la zone d'édition reçues en provenance de l'unité d'entrée de zone, dans lequel l'unité d'extraction de zone comporte :
une unité de classification de zone qui classifie les données lues du document en une zone graphique et en une zone de texte ; et
une unité d'extraction de zone graphique qui sort des données de zone graphique par l'extraction des données de zone graphique en provenance des données lues du document comme étant les données extraites ou une unité d'extraction de zone de texte qui sort des données de zone de texte par l'extraction des données de zone de texte en provenance des données du document numérisé par balayage comme étant les données extraites ; et
une unité de conversion de données qui édite les données extraites et combine les données éditées et les données de non-édition afin de produire la page éditée,
dans lequel l'unité d'entrée d'une zone reçoit des coordonnées, une zone graphique, ou une zone de texte comme étant la zone d'édition en provenance d'un utilisateur.

9. Appareil selon la revendication 8, dans lequel l'unité de lecture comporte une unité de numérisation par balayage à des fins de numérisation de la page par balayage de telle sorte que les données du document sont lues en provenance de la page numérisée par balayage.

10. Appareil selon la revendication 8, dans lequel l'unité d'entrée de zone sort les coordonnées comme étant les informations de la zone d'édition.

11. Appareil selon la revendication 8, dans lequel l'unité d'entrée de zone sort au moins l'une parmi la zone graphique et la zone de texte comme étant les informations de la zone d'édition.

12. Appareil selon la revendication 8, dans lequel l'unité de conversion de données édite les données extraites pour souligner la zone d'édition de la page au moyen d'une ligne d'une épaisseur et d'une couleur prédéterminées.

13. Appareil selon la revendication 8, dans lequel l'unité de conversion de données édite les données extraites pour placer un contour d'une épaisseur et d'une couleur prédéterminées autour de la zone d'édition de la page.

14. Appareil selon la revendication 8, dans lequel l'unité de conversion de données édite les données extraites pour remplir la zone d'édition de la page au moyen d'une couleur prédéterminée.

15. Appareil selon la revendication 8, dans lequel l'unité de conversion de données édite les données extraites pour appliquer une mosaïque d'une couleur prédéterminée sur la zone d'édition de la page.

16. Appareil selon la revendication 8, dans lequel l'unité de conversion de données détermine une caractéristique de la zone d'édition et édite les données extraites en fonction de la caractéristique d'édition de la zone d'édition.

17. Appareil selon la revendication 8, dans lequel l'unité de conversion de données détermine une fréquence des données extraites, et édite la zone extraite en fonction d'une valeur d'édition correspondant à la fréquence.

18. Périphérique multifonctionnel ayant une fonction d'édition, le périphérique multifonctionnel comportant :
un appareil de numérisation de document par balayage selon l'une quelconque des revendications 8 à 17 ; et une unité de sortie qui sort les données du document édité.

19. Périphérique multifonctionnel selon la revendication 18, dans lequel l'unité de sortie comporte une unité d'impression qui imprime les données du document édité.

20. Périphérique multifonctionnel selon la revendication 18, dans lequel l'unité de sortie comporte une unité de transfert qui transfère les données du document édité vers un dispositif externe.

21. Support d'enregistrement lisible par ordinateur permettant de stocker un code lisible par ordinateur pour effectuer un procédé de numérisation de document par balayage selon l'une quelconque des revendications 1 à 7.
